# EUROPEAN PATENT SPECIFICATION

(11) **EP 4 286 132 B1**
(45) Date of publication and mention of the grant of the patent: **13.11.2024**
(21) Application number: 22177084.5
(22) Date of filing: 02.06.2022
(51) Int. Cl.: B29C 44/50, A47H 23/05, E04H 17/00, B29K 105/26, B29L 23/00, B29L 31/00

(54) **RESIN TUBES, METHOD OF PREPARATION AND USE IN CURTAINS AND FENCES**
KUNSTHARZROHRE, VERFAHREN ZUR HERSTELLUNG UND VERWENDUNG IN VORHÄNGEN UND ZÄUNEN
TUBES DE RÉSINE, PROCÉDÉ DE PRÉPARATION ET UTILISATION DANS DES RIDEAUX ET CLÔTURES

(43) Date of publication of application: 06.12.2023
(73) Proprietor: Shanghai Kenda Industrial Co., Ltd., Shanghai (CN)
(72) Inventor: Chen, Hengcai, Shangai (CN)
(74) Representative: Bandpay & Greuter

(56) References cited:
- CN-A- 1 565 830
- JP-A- 2003 275 094
- US-A- 5 899 442
- US-A1- 2005 064 121

## Description

### TECHNICAL FIELD

The present invention pertains to the field of environmentally friendly materials, and in particular relates to resin tubes, a method of preparation and use in curtains and fences.

### BACKGROUND

Curtains made of natural stalks like reed and bamboo are widely used for sun shading. A fence is a barrier that stops people or animals, i.e., a structure like a palisade or guardrail. Materials of traditional fences in early days were chosen as stone walls or wood, while barbed wires, high tensile wires and the like are being widely used today. At present, fences that are most used in the market are made of PVC. Due to high productivity, consistent quality and other advantages of PVC, polypropylene or like materials, many current thin tubes for making curtains and fences, such as disclosed for example in US 2005064121 A1, are made of PVC or polypropylene. However, as PVC or polypropylene thin tubes have smooth, glossy surfaces, their texture is unnatural. Of course, in the prior art, there are methods capable of preparing thin tubes with portions resembling bamboo nodes by passing a resin through a pair of male and female rollers, or preparing thin tubes with convexities and concavities on the surface. However, such surface convexities and concavities are bulky, and the surface suffers from light reflection and other drawbacks. Thus, natural texture remains unachieved.

Thin resin tubes for use in curtains or fences can be easily produced and extruded when intended to be identical in shape. However, when required to guarantee natural texture, this would be difficult because of shape inconsistency. Further, extrusion of thin tubes with a smooth surface is easy, but the production of thin tubes with irregular surface convexities and concavities would be difficult.

### SUMMARY

It is object of the present invention to provide resin tubes, a method of preparation and use in curtains and fences.

The present invention is achieved by the following technical solutions.

In a first aspect, the present invention relates to resin tubes which are thin tubes made of a foamed polypropylene resin. The thin tubes have a wall thickness t from 0.6 to 0.8 mm, an outer diameter d from 3 to 10 mm, an inner diameter from 1 to 7 mm and an apparent specific gravity from 0.8 to 0.9.

The resin tubes comprise the following components by weight percentage:

| | |
|---|---|
| recycled polypropylene | From 50 to 55% |
| non recycled polypropylene | From 35 to 40% |
| calcium carbonate | From 5 to 10% |
| foaming agent | From 0.20 to 0.50% |
| pigment | From 1 to 5% |
| UV absorber | From 0.1% to 1% |
| mixed oil | From 0.10% to 1% |

According to the present invention, the recycled polypropylene is chosen to have a specific gravity of 0.9, natural appearance and appropriate hardness and be added with an appropriate amount of auxiliary materials or inorganic fillers. The thin tubes of the present invention have a specific gravity lower than that of non-foamed thin tubes. The foamed resin tubes of the present invention have a foaming capacity from 20 to 30%. A foaming capacity higher than the upper limit of the range would lead to inadequate hardness and easy deformability of the thin tubes. A foaming capacity lower than the lower limit of the range would lead to insufficient wrinkling of the resin tube surface.

According to the present invention, a colored material or pigment is used to impart to the product a color resembling that of a natural material. As such, the appearance of the product has a color that is closer to a natural color.

According to the present invention, the calcium carbonate used as an auxiliary material can improve concealing ability to the product and increase a surface friction coefficient thereof.

According to the present invention, the UV absorber used as an auxiliary material enable the product to have sun shading properties. In applications with direct sunlight, the addition of the material allows curtains and fences to be more durable and have an extended service life.

According to the present invention, mixed oil may be paraffin wax.

Preferably, the thin tubes have longitudinal fine lines and irregular crinkles on their surface, which impart a natural style to the thin tubes and make them not easy to pull out during preparation. There are 1-mm crinkles on the surface of each thin tube on 5 to 8 parts.

Preferably, the thin tubes have cross-sectional contours which are closed shapes formed by convex curves. Convexities and concavities on their surface result in reduced surface gloss, making them appear more natural and aesthetically appealing. Moreover, the thin tubes are made not easy to fall off.

Preferably, the thin tubes are cross-sectionally circular or elliptic in shape.

In a second aspect, the present invention relates to a method of preparation for the resin tubes as defined above, which comprises the steps of:
- feeding raw materials for the resin tubes to an extruder, where they are melted and mixed,
- extruding the melted mixture from a die at an annular exit,
- guiding it to a cooling tank where it is cooled and solidified, and
- cutting it into pieces with a desired length as the resin tubes.

An outer diameter of the die orifice is at a ratio from 0.3 to 0.4 to the outer diameter of the thin resin tubes. This process parameter is critical for the preparation of the thin resin tubes with a natural style.

In the method of preparation, during use of the foaming agent with the polypropylenes, the foaming agent is desired to be evenly dispersed over the polypropylene surface.

The extruded melted resin is solidified by passing it through a cooling tank that is about 2 m long. The cooling tank employs water cooling. The thin tube is pulled out from a roller at a speed from 10 to 100 m/min, preferably from 30 to 70 m/min. A speed higher than 100 m/min would lead to breakage of the resin tube.

The extruded thin tube is cut into from 100 to 300 cm long pieces, depending on the intended use. In light shielding, sun shading or interior decoration applications, the length may be approximately from 30 to 270 cm. In food packaging applications, the length may be about from 5 to 40 cm.

According to the invention, the foaming agent in the raw materials for the resin tubes accounts for from 0.20 to 0.50% by weight of the total materials. This component can ensure that the prepared thin tubes have natural appearance and appropriate hardness. The present invention is not limited to any particular type of foaming agent, and both volatile foaming agents with boiling points lower than the melting temperature and decomposable foaming agents that decompose into gases at high temperatures are applicable. According to the present invention, the foaming agent accounts for from 0.20 to 0.50% by weight of the total materials. A used amount of the foaming agent lower than the lower limit of the range would make it impossible to eliminate gloss on the resin tube surface. Consequently, the surface will remain smooth and fail to have natural texture. A used amount of the foaming agent exceeding the upper limit of the range would lead to insufficient hardness and proneness to breakage of the resin tube walls. For these reasons, the foaming agent is used in an amount from 0.20 to 0.50% in accordance with the present invention.

Preferably, the extruder is a single-screw extruder which has a screw diameter from 50 to 55 mm and a screw length from 1697 to 1700 mm and is configured, in 4 sections thereof sequentially from a location around a feed hopper, with temperatures from 120 to 13o°C, from 132 to 142°C, from 145 to 160°C and from 172 to 190°C.

Preferably, the extrusion from the extruder is performed at a speed from 10 to 100 m/min.

In a third aspect, the present invention relates to use of the resin tubes as defined above in curtains and fences, where the thin tubes can be woven into a curtain or fence.

Curtains woven from resin tubes prepared in accordance with the present invention can be used for light shielding, concealment from sight, food packaging or the like.

Thin resin tubes prepared in accordance with the present invention can be woven as wefts to produce curtains and fences, with cotton or polyester/cotton threads being used as warps. Both top and bottom ends of the warp threads are glued, in order to prevent easy falling-off of the thin resin tubes.

A so-made curtain is typically attached with plastic upper and lower rails and equipped with a hanger, and has a width from 30 to 270 cm and a length from 40 to 280 cm. As resin tubes prepared in accordance with the present invention have natural texture, when used for interior decoration, they are good for the eyes and can create a harmonious and pleasant atmosphere. In outdoor applications, when used to decorate a shop, they can raise the shop's profile and quality.

When used for food packaging, the attachment of upper and lower rails is unnecessary, and woven thin resin tubes can be directly used and sized to have a width from 5 to 40 cm and a length from 10 to 60 cm. Such packaging applications may include packaging of Kamaboko, Japanese-style sweets, gifts and so forth.

Fences woven from resin tubes prepared in accordance with the present invention can be used to stop people or animals.

The raw materials for preparing the resin tubes mainly include the recycled polypropylene (accounting for about 50 weight % of the total materials), the polypropylene resins and the foaming agent and other auxiliary agents. According to the present invention, thin tubes prepared from the various components in accordance with the above compositions feature longitudinal fine lines and irregular crinkles on the surface, have reduced surface gloss and look more natural and aesthetically appealing, which make their texture more natural.

The present invention has the following advantages:
(1) The thin tubes of the present invention have longitudinal fine lines and irregular crinkles on the surface, which impart a natural style to the thin tubes and make them not easy to pull out during preparation.
(2) The thin tubes of the present invention have cross-sectional contours which are closed shapes formed by convex curves. Convexities and concavities on their surface result in reduced surface gloss, making them appear more natural and aesthetically appealing. Moreover, the thin tubes are made not easy to fall off.
(3) The thin tubes of the present invention have a natural style like natural materials, a light weight, low deformability, strong concealing ability, good sun shading properties, a long lifespan, etc.
(4) Recycled polypropylene is used as a main raw material (accounting for about 50 weight % of the total materials). From the point of view of raw materials, waste is turned into wealth, resulting in a reduction in material cost. From the point of view of preparation methodology, the preparation of this environmentally friendly sun shading resin material can be accomplished simply by mixing the raw materials together, entailing a simple preparation process that does not involve any chemical reaction or produce any pollution to the environment. Compared with traditional sun shading PVC curtains and fences, environmentally friendly sun shading curtains and fences produced from resin tubes prepared according to the present invention are advantageous in higher environmental friendliness, no pollution to the environment, as well as higher strength and an extended lifespan resulting from the material improvement.

### BRIEF DESCRIPTION OF THE DRAWINGS

Fig. 1 is an enlarged cross-sectional cutaway view of the structure of a thin resin tube according to the present invention, in which, 1 denotes a thin resin tube; 2, a crinkle; and 3, a bubble;
Fig. 2 is an enlarged schematic diagram showing the structure of a longitudinal surface of a thin resin tube according to the present invention;
Fig. 3 shows a deployed configuration during use of thin resin tubes according to the present invention;
Fig. 4 shows a stowed configuration during use of thin resin tubes according to the present invention; and
Fig. 5 is an enlarged view of part of thin resin tubes according to the present invention during use.

### DETAILED DESCRIPTION

The present invention will be described in detail below with reference to a particular embodiment. It is to be noted that the following embodiment is presented for the mere purpose of further describing the invention, with the scope of protection thereof not being limited to the embodiment.

### Embodiment

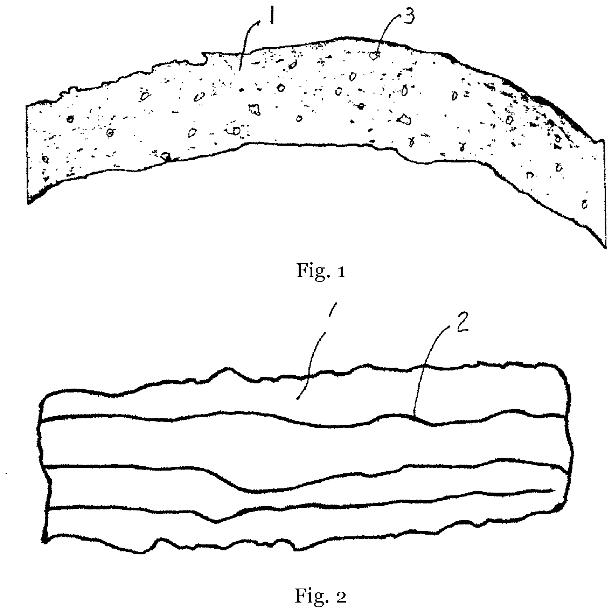

The present embodiment relates to resin tubes, as shown in Figs. 1 and 2. The thin tubes are made of a foamed polypropylene resin. The thin tubes have a wall thickness t from 0.6 to 0.8 mm, an outer diameter d from 3 to 10 mm, an inner diameter from 1 to 7 mm and an apparent specific gravity from 0.8 to 0.9.

The resin tubes have the following composition of components by weight percentage:

| | |
|---|---|
| recycled polypropylene | From 50 to 55% |
| non recycled polypropylene | From 35 to 40% |
| calcium carbonate | From 5 to 10% |
| foaming agent | From 0.20 to 0.50% |
| pigment | From 1 to 5% |
| UV absorber | From 0.1% to 1% |
| mixed oil | From 0.10% to 1% |

This composition has the best effect and contains the recycled polypropylene (accounting for about 50 weight% of the total materials), the polypropylene resins and the foaming agent and other auxiliary agents as main ingredients. According to the present invention, the thin tubes prepared from the various components according to the composition feature longitudinal fine lines and irregular crinkles on the surface, have reduced surface gloss and look more natural and aesthetically appealing, which make their texture more natural.

The resin tubes may have the following composition of components by weight or volume:

| | |
|---|---|
| recycled polypropylene | 55 kg |
| polypropylene | 45 kg |
| calcium carbonate-containing polypropylene | 8 kg |
| foaming agent | 230 g |
| pigmented polypropylene pellets | 1.5 kg |
| UV absorber-containing polypropylene pellets | 3 kg |
| mixed oil | 40 ml |

The resin tubes may have the following composition of components by weight or volume:

| | |
|---|---|
| recycled polypropylene | 52 kg |
| polypropylene | 41 kg |
| calcium carbonate-containing polypropylene | 7 kg |
| foaming agent | 220 g |
| pigmented polypropylene pellets | 1.4 kg |
| UV absorber-containing polypropylene pellets | 2 kg |
| mixed oil | 30 ml |

According to the present invention, the recycled polypropylene is chosen to have a specific gravity of 0.9, natural appearance and appropriate hardness and be added with an appropriate amount of auxiliary materials or inorganic fillers. The thin tubes of the present invention have a specific gravity lower than that of non-foamed thin tubes.

The apparent specific gravity is obtained by weighting one meter of a tube on a scale.

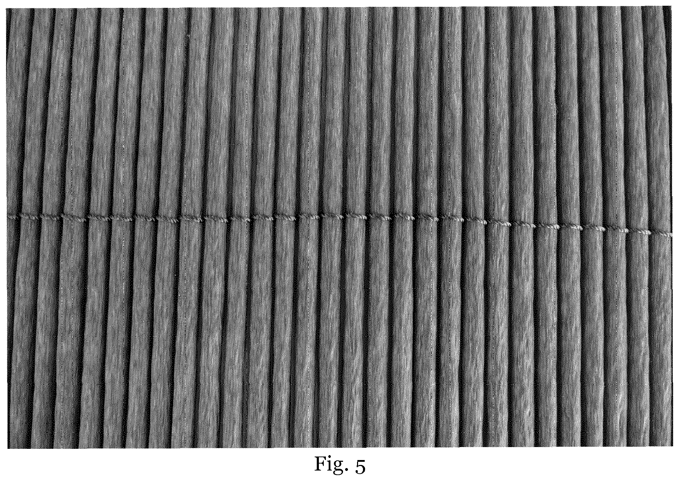

The foamed resin tubes of the present invention have a foaming capacity from 20 to 30%. A foaming capacity higher than the range would lead to insufficient hardness and easy deformability of the thin tubes. A foaming capacity lower than the range would lead to insufficient wrinkling of the resin tube surface, as shown in Fig. 5.

The present embodiment also relates to a method of preparation for the resin tubes as defined above, which includes the steps as detailed below.

The raw materials of the resin tubes are fed into an extruder, where they are melted and mixed. The melted mixture is extruded from an annular die orifice and guided into a cooling tank, where it is cooled and solidified. It is then cut into pieces with a desired length as the resin tubes. An outer diameter of the die orifice is at a ratio from 0.3 to 0.4 to the outer diameter of the thin resin tubes. This process parameter is critical for the preparation of the thin resin tubes with a natural style.

The extruder is a single-screw extruder which has a screw diameter from 50 to 55 mm and a screw length from 1697 to 1700 mm and is configured, in 4 sections thereof sequentially from a location around a feed hopper, with temperatures from 120 to 130°C, from 132 to 142°C, from 145 to 160°C and from 172 to 190°C. The die orifice is shaped with an outer diameter of 13.5 mm and an inner diameter of 10 mm. Air is blown in from a small hole at the center of the die, while the melted resin is being extruded from the die that is disposed at a front end of the extruder. The extruded thin resin tube is immersed into water 10 cm away and thus solidified. After that, it is passed through a 2-m long water tank, pulled out from a roller at a speed of 60 m/min, and cut into 310-cm long pieces. In this way, 19 thin resin tubes can be produced per minute.

The thin tubes have a wall thickness t from 0.6 to 0.8 mm, an outer diameter d from 3 to 10 mm, an inner diameter from 1 to 7 mm and an apparent specific gravity from 0.8 to 0.9. In order to measure a specific gravity of the thin resin tubes, they are cut into 30 cm long pieces and vertically immersed in water, and the specific gravity is calculated as the immersed length divided by the total length. The specific gravity of the thin resin tubes prepared using the method of the present invention is 16%.

As shown in Fig. 1 or 2, the thin resin tubes 1 exhibit appropriately reduced gloss, making them non-light-reflective and with natural appearance. Moreover, on their surface, there are quasi-natural fine crinkles 2, creating irregular convexities and concavities and irregular texture closer to natural texture. The numerous irregular crinkles are longitudinally distributed over the surface of the thin tubes, making the thin tubes more resemble a natural material. Further, there are also wave-shaped irregular convexities and concavities that are more spaced apart than the crinkles, as well as fine bubbles 3 in walls of the tubes.

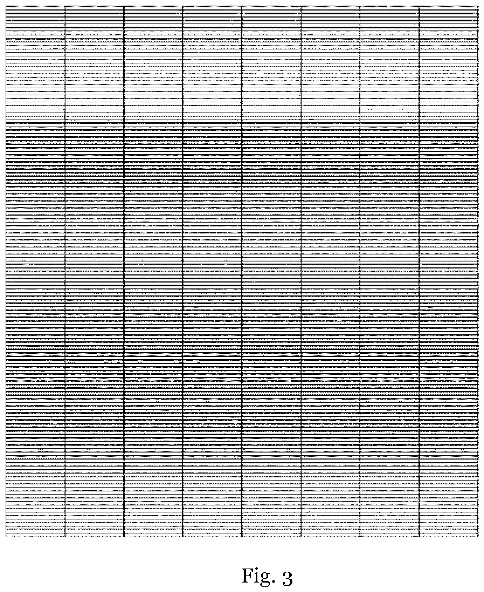

As shown in Fig. 3, the prepared thin resin tubes are woven into a curtain or fence with black cotton threads being used as warps, which are alternatively used at an interval from 10 cm to 3 cm at 32 locations. Two warp threads are wound around a thin resin tube and then twisted 180°, followed by placement of another thin resin tube. This process is repeated until a total length of 170 cm is reached. The threads are then cut off and glued together to avoid easy falling-off. The product is cut along a central line into two equal sheets, each with thin tubes aligned on both sides. In this way, two final products both with a width of 88 cm, a height of 170 cm and 16 seam lines are obtained. When used as curtains, the attachment of upper and lower rails is further needed.

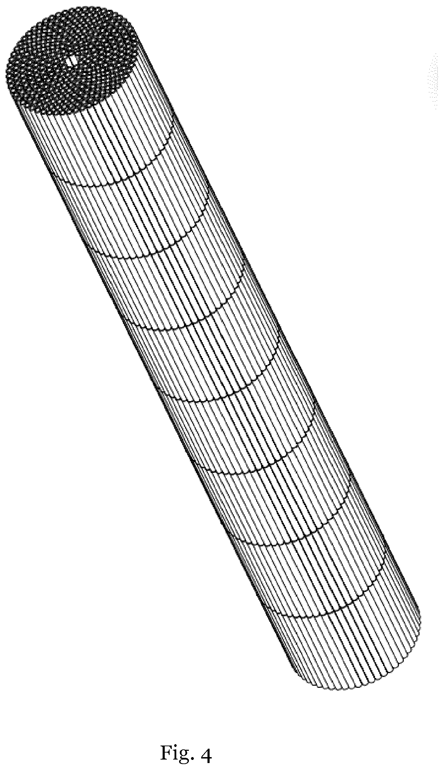

Fig. 4 shows a product in a stowed configuration. Before use, the product is placed in a packaging bag, box or case.

Curtain or fences woven from resin tubes prepared in accordance with the present invention have the following advantages: a foaming capacity is controlled within the range from 20 to 30% according to the present invention. A value exceeding the upper limit of this range would lead to insufficient hardness and easy deformability of the thin tubes. A foaming capacity lower than the lower limit of the range would lead to insufficient wrinkling of the resin tube surface. As a result, the prepared thin resin tubes have a natural style like natural materials, a light weight, low deformability, strong concealing ability, good sun shading properties, a long lifespan and other advantages. The thin tubes of the present invention have cross-sectional contours that are closed shapes formed by convex curves. Convexities and concavities on their surface result in reduced surface gloss, making them appear more natural and aesthetically appealing, as shown in Fig. 5.

A particular embodiment of the present invention has been described above. It should be understood that the present invention is not limited to the foregoing specific embodiment, and those skilled in the art can make various variations or modifications within the scope of the appended claims, while not affecting the essence of the present invention.

## Claims

1. Resin tubes, wherein being thin tubes made of a foamed polypropylene resin, wherein the thin tubes have
- a wall thickness t from 0.6 to 0.8 mm,
- an outer diameter d from 3 to 10 mm,
- an inner diameter from 1 to 7 mm and
- an apparent specific gravity from 0.8 to 0.9;
**characterized in that**
the resin tubes' comprise the following components by weight percentage:
| | |
|---|---|
| recycled polypropylene | From 50 to 55% |
| non recycled polypropylene | From 35 to 40% |
| calcium carbonate | From 5 to 10% |
| foaming agent | From 0.20 to 0.50% |
| pigment | From 1 to 5% |
| UV absorber | From 0.1 %to 1% |
| mixed oil | From 0.10% to 1% |

2. The resin tubes according to claim 1, **characterized in** having longitudinal fine lines and irregular crinkles on the surface.

3. The resin tubes according to any one of claims 1 or 2, **characterized in** having cross-sectional contours which are closed shapes formed by convex curves.

4. The resin tubes according to claim 3, **characterized in** being cross-sectionally circular or elliptic in shape.

5. A method of preparation for the resin tubes according to any one of claims 1 to 4, **characterized in** comprising the steps of:
- feeding raw materials for the resin tubes to an extruder, where they are melted and mixed,
- extruding the melted mixture from an annular die orifice,
- guiding it to a cooling tank where it is cooled and solidified, and
- cutting it into pieces with a desired length as the resin tubes.

6. The method of preparation for the resin tubes according to claim 5, **characterized in that** the extruder is a single-screw extruder which has a screw diameter from 50 to 55 mm and a screw length from 1697 to 1700 mm and is configured, in 4 sections thereof sequentially from a location around a feed hopper, with temperatures from 120 to 130°C, from 132 to 142°C, from 145 to 160°C and from 172 to 190°C.

7. The method of preparation for the resin tubes according to claim 5 or 6, **characterized in that** the extrusion from the extruder is performed at a speed from 10 m/min to 100 m/min.

8. Use of the resin tubes according to any one of claims 1 to 4 in curtains and fences, **characterized in that** the thin tubes are able to be woven into a curtain or fence by binding a plurality of them together.

## Patentansprüche

1. Harzröhren, wobei es dünne Röhren sind, die aus einem geschäumten Polypropylenharz gefertigt sind, wobei die dünnen Röhren Folgendes aufweisen
- - eine Wandstärke t von 0,6 bis 0,8 mm,
- - einen Außendurchmesser d von 3 bis 10 mm,
- - einen Innendurchmesser von 1 bis 7 mm und
- - ein Schüttgewicht von 0,8 bis 0,9; **dadurch gekennzeichnet, dass** die Harzröhren die folgenden Komponenten nach Gewichtsprozent umfassen:
| | |
|---|---|
| recyceltes Polypropylen | von 50 bis 55 % |
| nicht recyceltes Polypropylen | von 35 bis 40 % |
| Calciumcarbonat | von 5 bis 10 % |
| Schaumbildner | von 0,20 bis 0,50 % |
| Pigment | von 1 bis 5 % |
| UV-Absorber | von 0,1 % bis 1 % |
| Mischöl | von 0,10 % bis 1 % |

2. Harzröhren nach Anspruch 1, **dadurch gekennzeichnet, dass** sie feine Längslinien und unregelmäßige Falten auf der Oberfläche aufweisen.

3. Harzröhren nach einem der Ansprüche 1 oder 2, **dadurch gekennzeichnet, dass** sie Querschnittskonturen aufweisen, die geschlossene Formen sind, die durch konvexe Kurven gebildet sind.

4. Harzröhren nach Anspruch 3, **dadurch gekennzeichnet, dass** sie im Querschnitt kreisförmig oder elliptisch sind.

5. Verfahren zum Herstellen von Harzröhren nach einem der Ansprüche 1 bis 4, **dadurch gekennzeichnet, dass** es die folgenden Schritte umfasst:
- Zuführen von Rohmaterial für die Harzröhren zu einem Extruder, wo es geschmolzen und gemischt wird,
- Extrudieren des geschmolzenen Gemischs aus einer ringförmigen Düsenöffnung,
- dessen Leiten in einen Kühltank, wo es abgekühlt und verfestigt wird, und
- dessen Schneiden in Stücke mit der gewünschten Länge für die Harzröhren.

6. Verfahren zum Herstellen von Harzröhren nach Anspruch 5, **dadurch gekennzeichnet, dass** der Extruder ein Einschneckenextruder ist, der einen Schneckendurchmesser von 50 bis 55 mm und eine Schneckenlänge von 1697 bis 1700 mm aufweist und in 4 Abschnitten davon nacheinander von einer Stelle um einen Zufuhrtrichter herum konfiguriert ist, mit Temperaturen von 120 bis 130 °C, von 132 bis 142 °C, von 145 bis 160 °C und von 172 bis 190 °C.

7. Verfahren zum Herstellen von Harzröhren nach Anspruch 5 oder 6, **dadurch gekennzeichnet, dass** die Extrusion aus dem Extruder mit einer Geschwindigkeit von 10 m/Min bis 100 m/Min durchgeführt wird.

8. Verwendung der Harzröhren nach einem der Ansprüche 1 bis 4 in Vorhängen und Zäunen, **dadurch gekennzeichnet, dass** es möglich, die dünnen Röhren durch Zusammenbinden einer Vielzahl davon zu einem Vorhang oder Zaun zu weben.

## Revendications

1. Tubes en résine, étant des tubes minces constitués d'une résine de polypropylène expansé, les tubes minces ayant
- une épaisseur de paroi t de 0,6 à 0,8 mm,
- un diamètre externe d de 3 à 10 mm,
- un diamètre interne de 1 à 7 mm et
- une densité spécifique apparente de 0,8 à 0,9 ;
**caractérisés en ce que**
les tubes en résine comprennent les composants suivants en pourcentage en poids :
| | |
|---|---|
| polypropylène recyclé | de 50 à 55 % |
| polypropylène non recyclé | de 35 à 40 % |
| carbonate de calcium | de 5 à 10 % |
| agent moussant | de 0,20 à 0,50 % |
| pigment | de 1 à 5 % |
| absorbeur UV | de 0,1 % à 1 % |
| huile mixte | de 0,10 % à 1 % |

2. Tubes en résine selon la revendication 1, **caractérisés en ce qu'**ils présentent des lignes fines longitudinales et des plis irréguliers sur la surface.

3. Tubes en résine selon l'une quelconque des revendications 1 ou 2, **caractérisés en ce qu'**ils présentent des contours en coupe transversale qui sont des formes fermées formées par des courbes convexes.

4. Tubes en résine selon la revendication 3, **caractérisés en ce qu'**ils ont une forme de section transversale circulaire ou elliptique.

5. Procédé de préparation de tubes en résine selon l'une quelconque des revendications 1 à 4, ledit procédé comprenant les étapes de :
- introduction de matières premières pour les tubes en résine dans une extrudeuse, où elles sont fondues et mélangées,
- extrusion du mélange fondu depuis un orifice de filière annulaire,
- guidage de celui-ci vers un réservoir de refroidissement où il est refroidi et solidifié, et
- découpage de celui-ci en pièces de la longueur souhaitée comme étant les tubes en résine.

6. Procédé de préparation de tubes en résine selon la revendication 5, **caractérisé en ce que** l'extrudeuse est une extrudeuse monovis qui a un diamètre de vis de 50 à 55 mm et une longueur de vis de 1697 à 1700 mm et est configurée, dans 4 sections de celle-ci séquentiellement à partir d'un emplacement autour d'une trémie d'alimentation, avec des températures de 120 à 130 °C, de 132 à 142 °C, de 145 à 160 °C et de 172 à 190 °C.

7. Procédé de préparation de tubes en résine selon la revendication 5 ou 6, **caractérisé en ce que** l'extrusion à partir de l'extrudeuse est effectuée à une vitesse de 10 m/min à 100 m/min.

8. Utilisation de tubes en résine selon l'une quelconque des revendications 1 à 4 dans des rideaux et des clôtures, **caractérisée en ce que** les tubes minces peuvent être tissés en un rideau ou une clôture en liant conjointement une pluralité d'entre eux.
